# EUROPEAN PATENT SPECIFICATION

(11) **EP 4 459 337 B1**
(45) Date of publication and mention of the grant of the patent: **28.10.2026**
(21) Application number: 23020201.2
(22) Date of filing: 02.05.2023
(51) Int. Cl.: G02B 5/30, G02F 1/1335, G02F 1/13357, F21V 9/14, F21S 8/00

(54) **LIGHTING DEVICE WITH REFLECTED AND/OR REFRACTED LIGHT THROUGH POLARISING FILTERS**
BELEUCHTUNGSVORRICHTUNG MIT REFLEKTIERTEM UND/ODER GEBROCHENEM LICHT DURCH POLARISIERENDE FILTER
DISPOSITIF D'ÉCLAIRAGE AVEC LUMIÈRE RÉFLÉCHIE ET/OU RÉFRACTÉE À TRAVERS DES FILTRES POLARISANTS

(43) Date of publication of application: 06.11.2024
(73) Proprietor: Gasparini, Marcello, 41012 Carpi MO (IT)
(72) Inventor: Gasparini, Marcello, 41012 Carpi MO (IT)

(56) References cited:
- EP-A2- 0 895 102
- JP-A- 2008 270 222
- KR-B1- 101 306 546
- US-A1- 2004 080 938
- US-A1- 2006 262 250
- US-A1- 2017 018 741
- US-A1- 2020 292 151
- US-A1- 2021 137 633
- US-A1- 2021 318 204
- US-B2- 10 114 242

## Description

### Field of application

The present invention relates to luminaires for civil dwellings with refracted light and/or light reflected by means of polarising filters, i.e., it relates to the constitution of luminaires in domestic, commercial, work, or industrial environments in which the polarising filters used to determine a limitation of the diffusion of light originating from a light source in a new and controlled manner and/or distributed through the filters and elements determining the reflection and/or refraction of light from the source.

### Known art

The state of the art already includes luminaires with the use of polarising filters in which said filters are placed on opposing surfaces to limit or bias the light source. The contraposition of the filters is achieved by superimposing the flat surfaces carrying the filters on top of each other and allowing the user to rotate the polarisation of one filter relative to the other, thus adjusting the light passing through said filters. With these arrangements, wall or table lamps are known that are equipped with a lever, accessible to the user, that allows him to change the amount of light passing through the superimposed polarising filters.

The known technique includes document US 3782104 A also clocks where the motion of the hands is achieved by rotating surfaces between flat polarised filters superimposed in the direction of the clock face and illuminated from the back of the clock face. The description identifies how to realise a specific colouring of the conformation surface of the hands of the watch thus realised.

Moreover, the optical effects in the propagation of light, i.e. reflection, refraction, diffraction, and polarisation of light, have long been known and describe the behaviour of light in its propagation in the air, in materials, and in the media that light strikes and/or passes through.

That is to say, some of these optical effects are employed in the construction of room lighting luminaires, particularly in the limitation of scattering in certain directions and the mediated representation of visual forms, such as the aforementioned clock, in which some of these optical effects are combined; furthermore, the aforesaid optical effects are used to form specific materials in which certain properties of light are limited or used to define measurements of physical quantities or to cancel distorting effects in the transmission of light in specific materials as described in prior art document CN 204832559 U.

Furthermore, the technique is known from document US 2021/0137633 A1 the realisation of a medical instrument for the superficial analysis of the skin of a man in which a series of LEDs arranged on a circumference illuminate a surface with crossed polarising filters and equipped with staggered holes to allow the passage of light beams with differentiated polarisation and juxtaposed. The user, a physician, views through a central lens the underlying skin illuminated by the instrument, which will present the skin surface with areas of different polarisation and, therefore, with different visibility through the central lens arranged in the instrument.

Although this instrument has an incomplete superimposition of two polarising filters, it is not suitable for illuminating rooms or large areas where massive illumination is required for the performance of human activities as a room illuminator needs.

More in the technique is known from document EP 760962 B1 all the possible behaviours of light propagating in a space between inclined surfaces that are reflective or translucent and according to the distribution on or near the surfaces of screens or filters, even polarising filters in contact with each other, determines the greater or lesser brightness or contrast of a flat LCD screen placed on one of the inclined surfaces in such a way that the observer detects its ability to represent a distribution of light to define an image desired by the manufacturer with illumination and contrast of areas on the surface in view to the observer.

However, even from this further document, it is not possible to identify, given the great variety of examples and all aimed at the superimposition of various interposed layers of air, of translucent undulating surfaces, of reflective layers with metallic coatings and others, teaching for the definition of the distribution of parts of a luminaire for rooms that in a simple constitution determines a strong or soft illumination capacity of the room in which it is placed.

The known technique of superimposed polarising filters is also described in US document 10114242 B2 in which two polarising filters are superimposed with the crossed direction of the polarisation lines with a liquid crystal layer and two outer layers in between, and superimposed on the polarising filters, acting as electrodes, transparent conductive layers, which are excited to vary the optical capabilities of the liquid crystal layer. That is, the electrically controlled action allows the combination of polarising filters and the liquid crystal layer to be dimmed; thus, when inserted into a curved visor, it serves to limit the passage of light. A clear example is proposed for motorbike helmets.

As seen, the known technique teaches how to vary the brightness of superimposed layers of polarising filters, but does not indicate how to make luminaires for environments in which the non-contacting polarising filters determine the propagation of light through them and through surfaces or bodies that it illuminates to seek massive diffusion in an environment.

Moreover, the lightning technique known from document KR 101306546 B1 shows a polarized reflection lighting system to create different impressive lightning rays by using a light sent from a light source, with a polarising filter placed on it, to a reflecting surface, i.e., a mirror, covered by a further polarising filter. As a consequence, the ambient occupied by this lightning system is illuminated by a large number of rays of different colours and directions, as many mirrors with polarising filters, reflecting light with different constitution and orientation, each one of the polarising filter are placed, side by side, on a spherical surface. This surface is rotated to spread the created coloured rays into the illuminated ambient.

Also, the prior art lightning system described does not make constant and diffusive ambient illumination if this lightning system is the only one in the illuminated ambient. That is a usual illumination of an ambient to allow a normal use of this lightning system not be achieved as the multiple rays of different colours can't aid people to use the lightning system in the usual moments of their living. Furthermore, this lightning system must be applied in two parts: one placed on the ambient ceiling, the other placed everywhere in the ambient to send light rays to the part on the ceiling.

Thus, there are no room luminaires known in the art that on the basis of the arrangement of the internal parts may present themselves as direct light diffusers or even indirect light, and on the basis of the internal arrangement of the surfaces, which the light passes through from the internal light source to the room or wall as soft light, maintain a uniform, preordained direction of the light, being able to operate as the direction of the light emitted and/or in its adjustment in intensity and, possibly, in colour even non-uniformly.

This state of the art is susceptible to considerable improvements with respect to the possibility of realising luminaires for civil environments with refracted light and/or reflected light by means of polarising filters which overcome the technical problems highlighted above and allow the realisation of luminaires which the light emitted by the luminaire can be controlled at the time of manufacture or also by the user at a later time, maintaining a desired modulation of the light radiation obtained.

The technical problem, therefore, underlying the present invention is that of realising luminaires for lighting civil dwellings with refracted light and/or reflected light by means of polarising filters, i.e. that of defining the reciprocal arrangement of the surfaces of the parts of the luminaire, which have polarising filters, and the arrangement of the surfaces themselves also according to the user's position of view and to the lighting effect which is preordained at the time of manufacture or determined by choice of the user.

A corollary to the aforementioned technical problem involves the need to make a choice of position of the illuminating surface and the wall(s) that make up the external structure of the luminaire in civil dwellings so that the control of light radiation or its modification by the user can be determined in a simple manner.

A further and not least purpose of the present invention is to identify a constructional form of the luminaire for civil living quarters which can present the light emitted in a direct or suffused manner or, also, controlled at will by the user.

### Summary of the invention

This problem is solved, according to the present invention, by luminaires in civil dwellings using refracted light and/or reflected light by means of polarising filters in which there is a light source emitting light radiation; an internal polarising filter superimposed on the light source and covering it at least partially; an external polarising filter supported and spaced from the light source on an external wall and from the internal polarising filter associated with the light source and supported on an internal wall near the light source; the two polarising filters are placed at right angles to each other, with the radiation polarisation lines at least partially covering the surface emitting light radiation from said source; the walls or supporting surfaces of the inner and outer polarising filters being spaced apart and curved with a radius of curvature between 1 mm and 10 m to produce a layer of air; characterised by the two supporting walls, i.e. inner and outer polarising filters, are fixed between them on the same structure constituting the civil room lighting luminaire; the inner wall being translucent or transparent to the light radiation and the outer wall also being translucent or transparent to the light radiation; the light radiation directed from the light source through both polarising filters is full or limited and dependent on the superposition of the inner and outer walls curved to each other with the respective polarising filters applied to them.

In a further embodiment, a room luminaire has the internal polarising filter applied on the outer surface of the inner wall and the external polarising filter applied on the inner surface of the outer wall, the walls carrying the polarising filters being spaced from a minimum of 1 mm to a maximum of 10 m apart and wherein the curvature does not cancel their distance.

Moreover, in an improved form of construction in which an opaque body is inserted in the space between the inner polarising filter and the outer polarising filter, the propagation of light radiation remains illuminated, while direct light radiation from the light source through both filters is limited.

Furthermore, a further refinement has in the space between the internal polarising filter and the external polarising filter inserted a transparent body which, due to the propagation of light radiation within it, allows the light radiation passing through it to pass through the external polarising filter without appreciable restriction.

Moreover, in a further embodiment, at least the outer wall is transparent and provided with a polarising filter on the outer surface and with a thickness that, in view of the propagation of light radiation within it, allows the light radiation passing through it to highlight the optical peculiarities of the material of which the outer wall is made.

Furthermore, in further refinement, the light source has a linear conformation in the emission of light radiation over its entire length.

More still, in a further embodiment, the light source with linear conformation is made to rotate on an axis parallel to the direction of the lines of the internal polarising filter on said source with linear conformation applied.

Further, a specific conformation of the invention presents the polarising filters applied to walls with transparent surfaces and wrapped around the light source in a double spiral and the direction of the lines of the polarising filter parallel to the edge of the spiral transparent surface.

A further refinement presents the transparent body, which, due to the propagation of light radiation inside it, shows colours according to the shape and material of which it is made by light radiation passing through it.

Finally, a room luminaire is conformed with the inner surface around the light source having a constant radius of curvature along a rectilinear axis.

Further features and advantages of the present invention, in the realisation of luminaires with refracted light and/or reflected light by means of polarising filters, will result from the description below of construction and realisation forms given by way of non-limiting and indicative reference to the five accompanying drawing plates.

### Brief description of the drawings

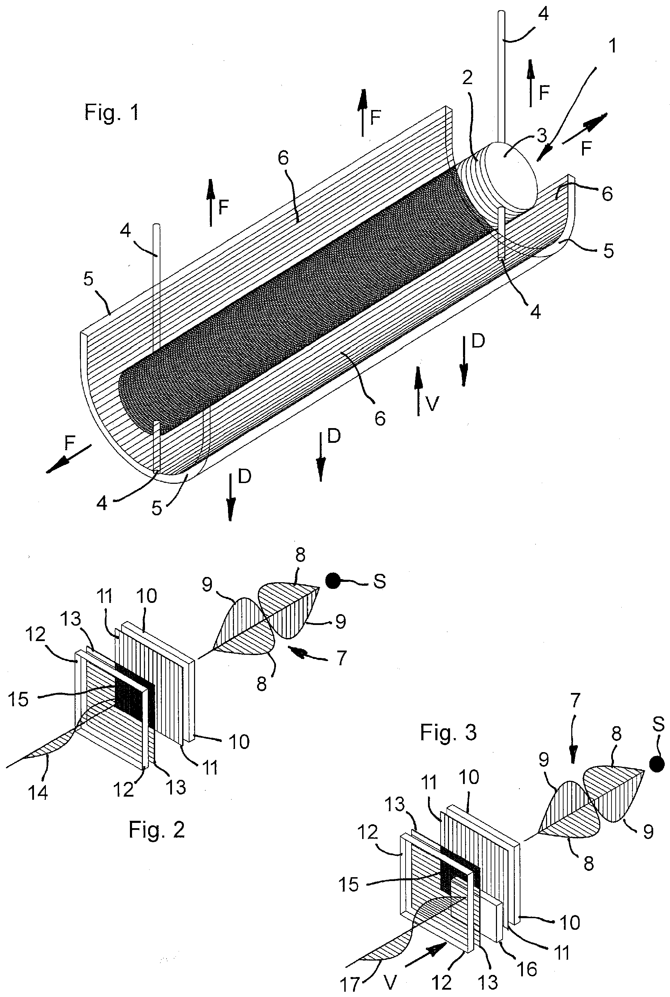

Figure 1 represents a lower perspective schematic view of a ceiling-mounted room luminaire showing the application of the constructive solution with light polarising screens according to the invention;

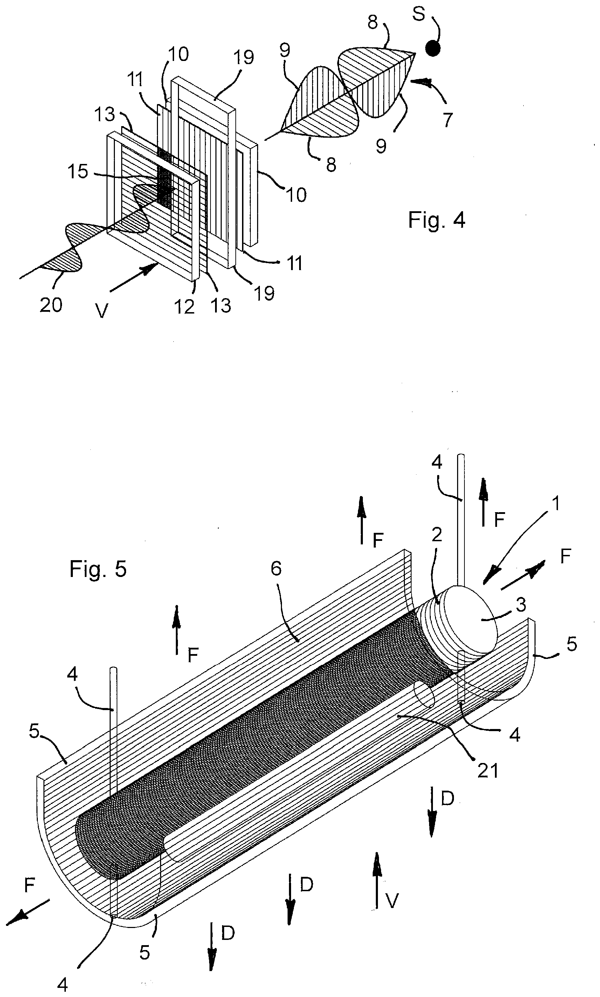

- Figures 2, 3, and 4 each represent a schematic perspective view of the propagation of light by means of two light-polarising filters, arranged between them with the polarisation at right angles and spaced apart; in Figure 2, the emitted light radiation is almost totally screened; in Figure 3, the insertion of an opaque body limits the direct light, by the opacity of the body, but by the reflection of the light on the opaque body allows the light radiation to pass through the external polarising filter, making the body itself visible from the outside; in Figure 4, the insertion of a transparent body increases the transmission of the light radiation by the refraction of the light as it passes through the transparent body;
- Figure 5 represents a schematic perspective view of a ceiling-mounted room luminaire, analogous to Figure 1, in which an opaque body is inserted between an inner wall of the luminaire having a light-polarising filter and an outer wall bearing the outer polarising filter, which is, as said, rotated by a right angle with respect to the position of the inner polarising filter;

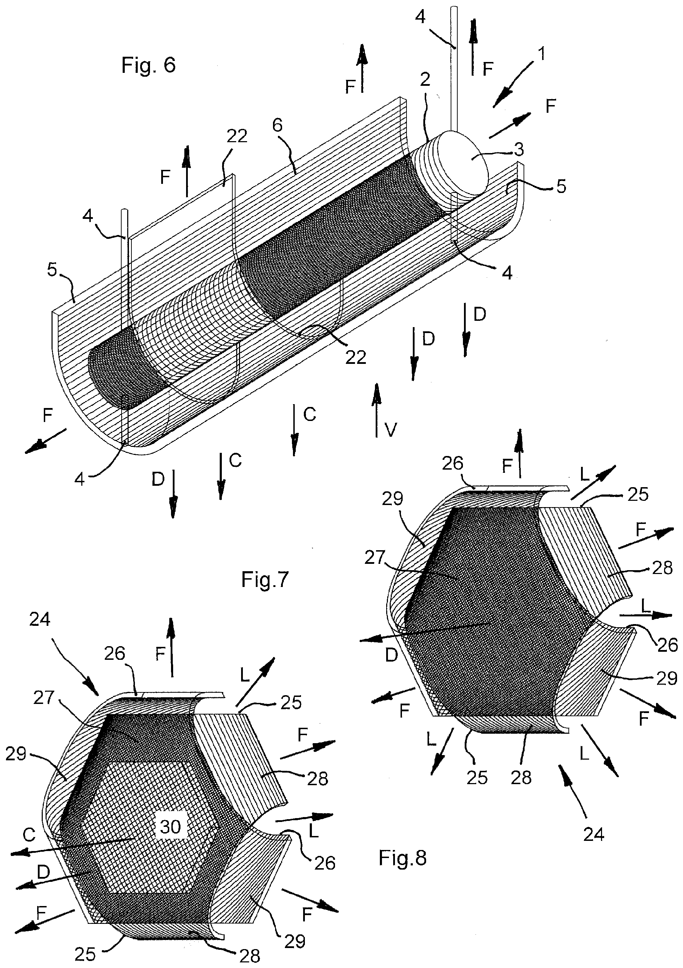

- Figure 6 represents a schematic perspective view of a room luminaire analogous to Figure 1 in which between the inner wall, with the internal polarising filter, and the outer wall, with the external polarising filter, is inserted a curved transparent body that transmits the light radiation back beyond the external polarising filter;
- Figure 7, represents a schematic perspective view of a further ambient lighting luminaire, here in the form of an applique in which the inner and outer walls, equipped with the respective light-polarising filters, are superimposed and curved with the ends, projecting towards the vertical wall on which the luminaire is applied, with direction normal to the vertical wall itself;
- Figure 8 represents the room lighting luminaire of Figure 7, above, in which a transparent body, which increases the transmission of light radiation in the central overlapping part between the inner and outer walls with the polarising filters, is inserted;

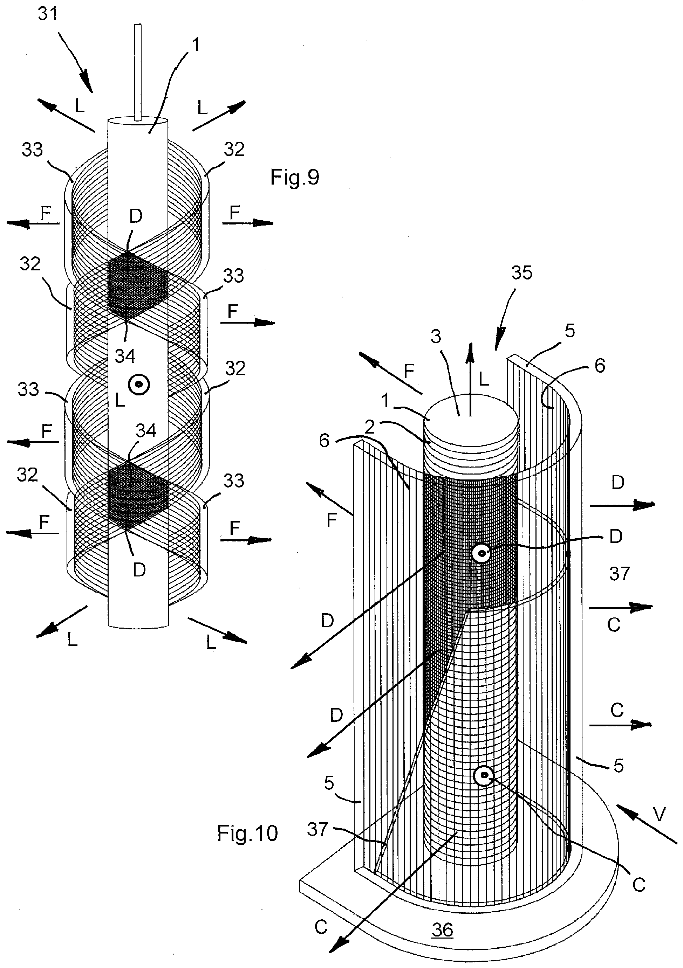

- Figure 9 depicts a schematic perspective view of a ceiling-mounted ambient luminaire in which the inner and outer walls, each carrying a polarising filter for the light radiation, are conformed in the form of a double, intersecting spiral, with the overlapping of the polarising filters at right angles at the successive intersections between the spirals in their overlapping;
- Figure 10 represents a lampshade-shaped table-top luminaire in which the central tubular light source is vertical to the pedestal;

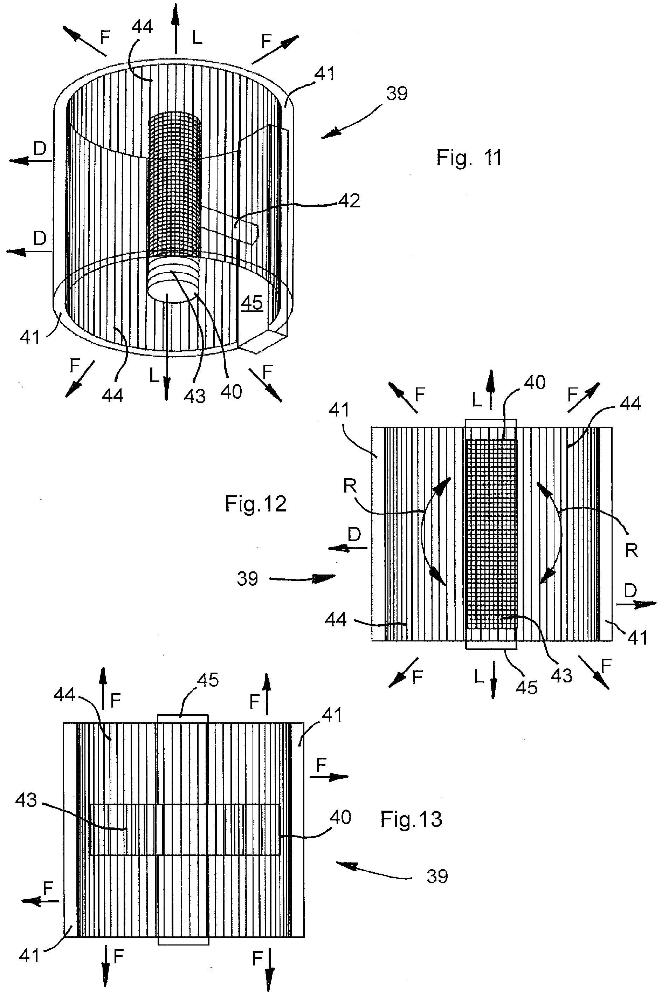

- Figures 11, 12, and 13 represent a wall-mounted ambient luminaire in which the light source, tubular and internal has a polarising filter on its surface; this source is connected by rotation on an axis normal to its tubular conformation; a bracket for fixing said rotation also delimits a wall having a transparent cylindrical surface and having a polarising filter on it with orientation rotated by a right angle with respect to the orientation of the polarising filter on the tubular light source in the position of Figures 11 and 12; while Figure 13 represents the rotated position of the tubular light source by a right angle with respect to the previous one.

### Detailed description of some embodiments

In Figure 1, a ceiling-mounted luminaire for lighting civil dwellings consists of a light source 1, herein shaped in the form of a cylindrical tube, on the outer surface of which, of the wall defining the shape of the light source, there is an internal polarising filter 2 for the emitted light radiation; the filter in the specific tubular shape has end bases 3 on which there is no polarising filter. The light source is suspended from the ceiling, not shown, by means of tie rods 4 which continue beyond the light source 1 to support also an outer transparent wall 5 which is provided with an outer polarising filter 6 the light radiation, in its inner surface facing the light source; the radiation propagates towards it outer wall from the light source 1. The location of the external polarising filter 6 is rotated by a right angle with respect to the location of the internal polarising filter 2 so that a user looking at the luminaire in direction V perceives a considerable dimming of the direct light radiation D while appreciating the filtered light radiation F from the polarising filter 2, directed towards the ceiling. The light source 1, even emitting the light radiation, remains dark because the external polarising filter 6 does not allow the polarised light, arriving at it, to pass through it, so the tubular body of the light source 1 to the user, looking from the direction V, appears dark almost black, while the luminaire emits light towards the ceiling and laterally as filtered light F.

It should be noted that the lines depicting the filters are represented in macroscopic dimension compared to the actual dimension, as a reminder of the single or combined optical phenomena underlying the invention in their specific application to luminaires in civil dwellings. The actual distance between the lines of the respective polarising filters 2 and 6 is commensurate with the wavelength of the light radiation and certainly known, as polarising filters have been known in the art to polarise visible light for decades.

In the following Figures 2, 3, and 4, therefore, the position of a generic light radiation 7 with propagation waves in both horizontal 8 and vertical 9 directions from a generic point light source S is depicted. In view of the composition of the walls of the described ambient luminaire, an inner wall 10 is provided with a first polarising filter 11 with a very precise direction of the lines of this filter, here vertical in the figure, and positioned on the opposite surface of the inner wall 10 with respect to the light source S, therefore, having the capacity to let through only the vertically polarised light radiation 9, in accordance with the direction of the lines of the polarising filter 11; the horizontally polarised light radiation 8 is stopped by the polarising filter 11. The subsequent transparent outer wall 12 has on its inner surface a second polarising filter 13 with the direction of the polarisation lines rotated at right angles to the direction of the lines of the polarising filter 11; this leads the user, who sees the superposition of the described filters and walls, to perceive the light radiation as null or even very limited 15, in the direction of the only horizontal polarisation 14 as depicted, i.e. corresponding with the direct light radiation D.

Furthermore, in Figure 3, the introduction between the inner walls 10 and outer walls 12, each equipped with polarising filters 11 and 13 facing each other and crossed at right angles, of an opaque body 16 modifies the propagation of light radiation between the walls to such an extent that the illuminated opaque body 16 can be seen, between the walls with the respective aforementioned polarising filters, due to the effect of the illumination of said opaque body and the reflection that the light radiation receives from its surface and that allows the light radiation 17 to exit the external polarising filter 13 allowing the vision V of the opaque body 16 beyond the external polarising filter.

Thus, in Figure 4, the introduction between the inner walls 10 and outer walls 12, each equipped with polarising filters 11 and 13 facing and crossing each other at right angles, of a transparent body 19 modifies the propagation of the light radiation between the walls to such an extent that it is possible to see the transparent body 19 transmitting the light radiation, modifying it according to its internal constitution, between the walls with the aforesaid respective polarising filters, as a result of the illumination of this transparent body and of the refraction that the light radiation receives when passing through it and that allows the light radiation 20 to exit the external polarising filter 13, allowing the vision V also through the transparent body 19, without a significant decrease of the intensity of the light radiation 20, i.e. corresponding with a light radiation C slightly attenuated.

In Figure 5, an ambient luminaire such as Figure 1 is associated with a generic opaque body 21 interposed between the facing polarising filters 2 and 6; the light radiation passing through the internal polarising filter 2 strikes the opaque body 21 and by reflecting itself is able to pass through the external polarising filter 6.

In Figure 6, an ambient luminaire such as Figure 1 is associated with a generic transparent body 22 interposed between the facing polarising filters 2 and 6, shown here in the form of a thick wall which is crossed by light radiation by refraction; the light radiation passing through the internal polarising filter 2 strikes the transparent body 22 and propagating within it is able to pass through C the external polarising filter 6 with greater intensity than the filtered radiation D.

In Figure 7, a wall-mounted ambient light luminaire 24 is constructed with two curved transparent surfaces 25 and 26, a lower transparent surface 25 and an upper transparent surface 26, overlapping between them only in the middle 27. Each curved transparent surface has a polarising filter on the face facing the other curved transparent surface, i.e. the lower surface 25 has the upper polarising filter 28 and the upper transparent surface 26 has the lower polarising filter 29. Due to the curved conformation of the overlapping transparent surfaces, only in the central part 27, there will be a zone in which the overlapping of the polarising filters 28 and 29 will have the direction of the respective filter lines orthogonal to each other, realising a distribution of the light radiation D of low emission in the centre in the central part 27, while at a greater distance from the centre, the emission increases up to the lateral full light L or even F, filtered, where one of the two polarising filters remains.

In Figure 8, the ambient lighting luminaire of Figure 7 is also fitted with a transparent body 30, in the central zone 27, between the two polarising filters 28 and 29, which behaves like the transparent body 19 or the generic transparent body 22, favouring the transmission of the light radiation C precisely from the central zone 27 of overlapping of the two superimposed polarising filters.

Figure 9 illustrates a ceiling-hung ambient luminaire 31 wherein the tubular light source 1 is enveloped but remains spaced apart, by a double spiral of transparent surfaces 32 right-handed and 33 left-handed. Polarising filters are placed on the double spiral transparent surfaces with the direction of the filter lines parallel to the edge of the spiral transparent surface. The superposition of Figure shows that in the intersection areas 34 of the spirals the emission of direct light radiation D is limited, whereas in the absence of superposition, the filtered light radiation F is emitted through the spiral transparent surfaces 32 and 33, and the lateral light radiation L, lateral or full, which is projected into the environment if not covered by the above-mentioned spiral transparent surfaces.

A table luminaire 35, shown in Figure 10, has a tubular light source 1 placed on a base 36 on which, at a distance from said source, is placed an outer transparent wall 5; the light source 1 is provided on its outer surface with a polarising filter 2 and the outer transparent wall 5 is provided on its inner surface with a polarising filter 6 placed at right angles to the filter 2 on the tubular light source. The insertion of a transparent body 37 between the tubular light source 1, with the polarising filter, and the outer transparent wall 5, causes the light radiation C to pass through said transparent body and also through the outer polarising filter 6 to illuminate in the vicinity of the base 36, i.e. the table not shown; where the transparent body 37 is not present, the visible radiation is always the direct light radiation D, very very attenuated; moreover, with the non-opaque end base 3 of the tubular light source, a free or full emission of light radiation L is realised vertically to the table and also in the direction of opposition to the user with the filtered light radiation F.

Finally, Figures 11, 12, and 13 illustrate a wall-mounted modifiable ambient lighting luminaire 39 in which a rotating light source 40, having a tubular shape, is suspended centrally within a cylindrical transparent wall 41; the suspension is by means of a horizontal arm 42 in the centerline of the tubular shape, which allows the light source to rotate R from the position with a vertical axis, of Figures 11 and 12, to the position with a direction rotated by a right angle, Figure 13. The surface of the tubular light source 40 has an internal polarising filter 43 with the lines of the filter coincident with the circumference of the tubular shape of the light source; on the internal surface of the cylindrical transparent wall, there is an external polarising filter 44 with polarisation lines in the vertical direction. The rotation of the horizontal arm 42 and the light source 40 is by pivotal rotation on a bracket 45 for fixing the wall modifiable ambient luminaire 39 to the wall itself, not shown.

That is, this modifiable room lighting luminaire 39, provided with a right angle arrangement of the polarisation of the outer polarising filter 44 with respect to the inner polarising filter 43, presents the level of illumination modifiable by rotating the light source, since the same is parallel to said fixing bracket 45, the position shown in Figure 12, with the rotational motion R of the rotating light source 40 so as to reach, even for small rotations, the position of Figure 13 with the light source rotated 40 by a right angle with respect to the starting position; the direction of the polarising filters 43 and 44, fixed at the respective surfaces now rotated, modifies the light radiation emitted by the ambient lighting luminaire, coinciding gradually from the direct light radiation D to the filtered radiation F, emitted in all directions by the modifiable lighting luminaire 39 at the position of Figure 13.

In addition, the realisation of luminaires for civil dwellings with refracted light and/or reflected light by means of polarising filters determine new ways of lighting and controlling the illumination of the rooms themselves and makes it possible to realise luminaires with changing ornamental effects by applying the described forms of arrangement of polarising filters on curved surfaces that are also not parallel to each other but not in contact.

The advantages in the construction of ambient lighting luminaires with refracted light and/or reflected light by means of polarising filters and in their use make it possible to create new aesthetic effects in a simple manner so that aesthetically different ambient lighting luminaires can be constructed with a studied and functional management for the specific application of ambient lighting in civil dwellings required.

In fact, a room lighting luminaire constructed according to the invention that has no opaque parts but allows only reflected light to be perceived by the user; or even a luminaire which, thanks to the use of polarising filters, allows different colours to be perceived when the light passes through the transparent bodies interposed between said internal and external polarising filters, even by simply moving a few centimetres in the view of the user and thus perceiving different colours for each eye, obtaining new and attractive aesthetic effects, determines the resolution of a technical problem of conformation of lighting luminaires for civil habitations in a simple and varied manner, satisfying multiple user requirements.

Finally, each ambient luminaire according to the invention can be used for artistic optical effects due to the singularity of the produced phenomenon not used in previously known ambient luminaires for civil dwellings.

Obviously, in the realisation of luminaires for civil dwellings with refracted light and/or reflected light by means of polarising filters, as described above, a technician of the branch, in order to satisfy specific and contingent requirements, may make numerous modifications, all of which are, however, contained within the scope of protection of the present invention as defined by the following claims.

## Claims

1. Civil room lighting luminaire with polarising filters (11, 13) comprising a light source (S, 1) emitting light radiation (7); an internal polarising filter (2, 28, 43) superimposed on the light source and at least partially covering it; an external polarising filter (6, 29, 44) supported and spaced from the light source on an external wall and from the internal polarising filter associated with the light source and supported on an internal wall near the light source; the two polarising filters are arranged with the polarisation lines of the radiation at right angles to each other, at least in a part of the emitting surface of the light radiation from said light source; the supporting walls or surfaces (5, 25, 26, 32, 33, 41) of the inner (2, 28, 43) and outer (6, 29, 44) polarising filters are spaced apart and curved with a radius of curvature between 1 mm and 10 m, resulting in a layer of air; **characterised in** this, that the two supporting walls, i.e. inner and outer polarising filters, are fixed between them on the same structure with the light source constituting the civil room lighting luminaire; the inner wall being translucent or transparent to the light radiation and the outer wall also being translucent or transparent to the light radiation; the direct light radiation (D), from the light source through both polarising filters, is full or limited and dependent on the superposition of the curved inner and outer walls with the respective polarising filters applied to them.

2. A civil room lighting luminaire, according to claim 1, wherein the internal polarising filter (2) is applied on the outer surface of said inner wall and the external polarising filter (6) is applied on the inner surface of said outer wall (5) the walls carrying the polarising filters being spaced from a minimum of 1 mm to a maximum of 10 m apart and wherein the curvature does not cancel their distance.

3. A civil room lighting luminaire, according to a previous claim 1 or 2, wherein an opaque body (21) is inserted in the space between the internal polarising filter (2) and the external polarising filter (6), which, due to the propagation of light radiation, remains illuminated, while direct light radiation (D) from the light source through both filters is limited.

4. A civil room lighting luminaire, according to a preceding claim 1 or 2, wherein a transparent body (22, 30, 37) is inserted in the space between the internal polarising filter (2) and the external polarising filter (6), which, due to the propagation of light radiation within it, allows the light radiation passing through it to pass through the external polarising filter (6) without appreciable restriction.

5. A civil room lighting luminaire, according to claim 1, wherein at least the outer wall is transparent and provided with a polarising filter on the outer surface and with a thickness which, due to the propagation of light radiation inside it, enables the light radiation passing through it to highlight the optical peculiarities of the material of which the outer wall is made.

6. A civil room lighting luminaire, according to a previous claim 1-5, wherein the light source (1) has a linear conformation in the emission of light radiation over its entire length.

7. A civil room lighting luminaire, according to claim 6 above, wherein the linear conformation light source (1) is made to rotate on an axis parallel to the direction of the lines of the internal polarising filter (43) on the linear conformation light source applied.

8. A civil room lighting luminaire, according to claim 1 above, wherein polarising filters are applied to walls with transparent surfaces (32, 33) wrapped around the light source in a double spiral and the direction of the polarising filter lines parallel to the edge of the spiral transparent surface.

9. A civil room lighting luminaire, according to claim 4 above, wherein the transparent body (22, 30, 37), due to the propagation of light radiation within it, shows colours according to the shape and material of which it is made by light radiation passing through it.

10. A civil room lighting luminaire, according to claim 6, wherein the inner surface around the light source (1) has a constant radius of curvature along a straight axis.

## Patentansprüche

1. Leuchte für Raumbeleuchtung mit Polarisationsfiltern (11, 13), umfassend
eine Lichtquelle (S, 1), die Lichtstrahlung (7) aussendet;
einen inneren Polarisationsfilter (2, 28, 43), der vor der Lichtquelle angeordnet ist und diese zumindest teilweise abdeckt;
einen äußeren Polarisationsfilter (6, 29, 44), der an einer Außenwand in einem Abstand zu der Lichtquelle und zu dem inneren Polarisationsfilter gehalten ist, der der Lichtquelle zugeordneten und an einer Innenwand in der Nähe der Lichtquelle gehalten ist;
wobei die beiden Polarisationsfilter zumindest in einem Teil der Austrittsfläche der von der Lichtquelle ausgehenden Lichtstrahlung mit den Polarisationslinien der Strahlung in rechten Winkeln zueinander angeordnet sind;
die Haltewände oder -oberflächen (5, 25, 26, 32, 33, 41) des inneren (2, 28, 43) und des äußeren (6, 29, 44) Polarisationsfilters sind zueinander beabstandet und mit einem Krümmungsradius zwischen 1 mm und 10 m gekrümmt, wodurch eine Luftschicht entsteht;
**dadurch gekennzeichnet, dass**
die beiden Haltewände, d.h. innerer und äußerer Polarisationsfilter, zwischen sich an derselben Struktur befestigt sind, wobei die Lichtquelle die Leuchte für die Raumbeleuchtung bildet;
wobei die innere Wand für die Lichtstrahlung durchlässig oder transparent ist und die äußere Wand ebenfalls für die Lichtstrahlung durchlässig oder transparent ist;
die direkte Lichtstrahlung (D) von der Lichtquelle durch beide Polarisationsfilter hindurch ist entweder vollständig oder begrenzt und hängt von der Überlagerung der gekrümmten Innen- und Außenwände mit den jeweils daran angebrachten Polarisationsfiltern ab.

2. Eine Leuchte für Raumbeleuchtung nach Anspruch 1, wobei der innere Polarisationsfilter (2) auf der Außenfläche der Innenwand und der äußere Polarisationsfilter (6) auf der Innenfläche der Außenwand (5) angebracht ist, wobei die die Polarisationsfilter haltenden Wände einen Abstand von mindestens 1 mm bis höchstens 10 m voneinander aufweisen und wobei die Krümmung ihren Abstand nicht aufhebt.

3. Eine Leuchte für die Raumbeleuchtung nach einem vorhergehenden Anspruch 1 oder 2, wobei ein lichtundurchlässiger Körper (21) in den Raum zwischen dem inneren Polarisationsfilter (2) und dem äußeren Polarisationsfilter (6) eingesetzt ist, der aufgrund der Ausbreitung der Lichtstrahlung beleuchtet bleibt, während direkte Lichtstrahlung (D) von der Lichtquelle durch beide Filter hindurch begrenzt ist.

4. Eine Leuchte für die Raumbeleuchtung nach einem vorhergehenden Anspruch 1 oder 2, wobei ein transparenter Körper (22, 30, 37) in den Raum zwischen dem inneren Polarisationsfilter (2) und dem äußeren Polarisationsfilter (6) eingesetzt ist, der aufgrund der Ausbreitung der Lichtstrahlung in seinem Inneren es ermöglicht, dass die durch ihn hindurchtretende Lichtstrahlung den äußeren Polarisationsfilter (6) ohne nennenswerte Einschränkung durchdringen kann.

5. Eine Leuchte für die Raumbeleuchtung nach Anspruch 1, wobei zumindest die Außenwand transparent und auf der Außenfläche mit einem Polarisationsfilter versehen ist sowie eine Dicke aufweist, die es der durch sie hindurchtretenden Lichtstrahlung aufgrund der Ausbreitung der Lichtstrahlung in ihrem Inneren ermöglicht, die optischen Besonderheiten des Materials, aus dem die Außenwand besteht, hervorzuheben.

6. Eine Leuchte für die Raumbeleuchtung nach einem der vorhergehenden Ansprüche 1-5, wobei die Lichtquelle (1) beim Aussenden von Lichtstrahlung über ihre gesamte Länge eine lineare Form aufweist.

7. Eine Leuchte für die Raumbeleuchtung nach dem vorhergehenden Anspruch 6, wobei die linear ausgebildete Lichtquelle (1) ausgebildet ist, sich um eine Achse zu drehen, die parallel zu der Richtung der Linien des auf der linear ausgebildeten Lichtquelle aufgebrachten inneren Polarisationsfilters (43) verläuft.

8. Eine Leuchte für die Raumbeleuchtung nach dem vorhergehenden Anspruch 1, wobei Polarisationsfilter an Wänden mit transparenten Oberflächen (32, 33) angebracht sind, die die Lichtquelle in einer Doppelspirale umschließen, und die Richtung der Linien der Polarisationsfilter parallel zu dem Rand der spiralförmigen transparenten Oberfläche verläuft.

9. Eine Leuchte für die Raumbeleuchtung nach dem vorhergehenden Anspruch 4, wobei der transparente Körper (22, 30, 37) aufgrund der Ausbreitung von Lichtstrahlung in seinem Inneren durch das hindurchtretende Licht Farben zeigt, die von seiner Form und dem Material, aus dem er besteht, abhängen.

10. Eine Leuchte für die Raumbeleuchtung nach Anspruch 6, wobei die Innenfläche um die Lichtquelle (1) herum einen konstanten Krümmungsradius entlang einer geraden Achse aufweist.

## Revendications

1. Luminaire d'éclairage de locaux civils avec filtres polarisants (11, 13) comprenant une source lumineuse (S, 1) émettant un rayonnement lumineux (7) ; un filtre polarisant interne (2, 28, 43) superposé sur la source lumineuse et la recouvrant au moins partiellement ; un filtre polarisant externe (6, 29, 44) supporté et espacé de la source lumineuse sur une paroi externe et du filtre polarisant interne associé à la source lumineuse et supporté sur une paroi interne à proximité de la source lumineuse ; les deux filtres polarisants sont agencés avec les lignes de polarisation du rayonnement en angles droits l'une par rapport à l'autre, au moins dans une partie de la surface d'émission du rayonnement lumineux à partir de ladite source lumineuse ; les parois ou surfaces de support (5, 25, 26, 32, 33, 41) des filtres polarisants interne (2, 28, 43) et externe (6, 29, 44) sont espacées et courbées avec un rayon de courbure compris entre 1 mm et 10 m, ce qui se traduit par une couche d'air ; **caractérisé en ce que** les deux parois de support, c'est-à-dire les filtres polarisants interne et externe, sont fixées entre elles sur la même structure avec la source lumineuse qui constitue le luminaire d'éclairage de locaux civils ; la paroi interne étant translucide ou transparente au rayonnement lumineux et la paroi externe étant également translucide ou transparente au rayonnement lumineux ; le rayonnement lumineux direct (D), à partir de la source lumineuse à travers les deux filtres polarisants, est total ou limité et dépend de la superposition des parois interne et externe courbées avec les filtres polarisants respectifs appliqués sur ces dernières.

2. Luminaire d'éclairage de locaux civils selon la revendication 1, dans lequel le filtre polarisant interne (2) est appliqué sur la surface externe de ladite paroi interne et le filtre polarisant externe (6) est appliqué sur la surface interne de ladite paroi externe (5), les parois portant les filtres polarisants étant espacées d'un minimum de 1 mm à un maximum de 10 m et dans lequel la courbure n'annule pas leur distance.

3. Luminaire d'éclairage de locaux civils selon la revendication 1 ou 2, dans lequel un corps opaque (21) est inséré dans l'espace entre le filtre polarisant interne (2) et le filtre polarisant externe (6) qui, du fait de la propagation du rayonnement lumineux, reste éclairé, alors que le rayonnement lumineux direct (D) à partir de la source lumineuse à travers les deux filtres est limité.

4. Luminaire d'éclairage de locaux civils selon la revendication 1 ou 2, dans lequel un corps transparent (22, 30, 37) est inséré dans l'espace entre le filtre polarisant interne (2) et le filtre polarisant externe (6) qui, du fait de la propagation du rayonnement lumineux dans ce dernier, permet au rayonnement lumineux passant par ce dernier de traverser le filtre polarisant externe (6) sans restriction notable.

5. Luminaire d'éclairage de locaux civils selon la revendication 1, dans lequel au moins la paroi externe est transparente et pourvue d'un filtre polarisant sur la surface externe et d'une épaisseur qui, du fait de la propagation du rayonnement lumineux à l'intérieur de cette dernière, permet au rayonnement lumineux de la traverser pour mettre en évidence les particularités optiques du matériau dont la paroi externe est constituée.

6. Luminaire d'éclairage de locaux civils selon l'une des revendications 1 à 5, dans lequel la source lumineuse (1) a une conformation linéaire concernant l'émission du rayonnement lumineux sur toute sa longueur.

7. Luminaire d'éclairage de locaux civils selon la revendication 6, dans lequel la source lumineuse (1) de conformation linéaire est montée de manière à pouvoir tourner sur un axe parallèle à la direction des lignes du filtre polarisant interne (43) appliqué sur la source lumineuse de conformation linéaire.

8. Luminaire d'éclairage de locaux civils selon la revendication 1, dans lequel les filtres polarisants sont appliqués sur des parois avec des surfaces transparentes (32, 33) enroulées autour de la source lumineuse en double spirale et la direction des lignes du filtre polarisant parallèles au bord de la surface transparente en spirale.

9. Luminaire d'éclairage de locaux civils selon la revendication 4, dans lequel le corps transparent (22, 30, 37), du fait de la propagation du rayonnement lumineux en son sein, fait apparaître des couleurs en fonction de la forme et du matériau dont il est constitué, par le rayonnement lumineux qui le traverse.

10. Luminaire d'éclairage de locaux civils selon la revendication 6, dans lequel la surface interne autour de la source lumineuse (1) a un rayon de courbure constant le long d'un axe droit.
